# EUROPEAN PATENT APPLICATION

(11) **EP 3 112 293 A2**
(43) Date of publication of application: **04.01.2017**
(21) Application number: 16175012.0
(22) Date of filing: 17.06.2016
(51) Int. Cl.: B65G 1/00, B65G 1/04

(54) **SYSTEM AND METHOD FOR STORING OBJECTS, INCLUDING ROLLING CONTAINERS**

(30) Priority: 29.06.2015 NL 2015047
(71) Applicant: Stichting Sangria, 4561 HN Hulst (NL)
(72) Inventor: VAN RIJN, Nicolaas Johannes Petrus, 4561 HN Hulst (NL)
(74) Representative: Patentwerk B.V.

(57) **Abstract**

The invention relates to a system (1) for storing objects, including rolling containers (21) comprising:
- a number of storage conveyors (7) for supporting and moving objects placed thereon,
- a shuttle track (10A-10C) extending transversely of the longitudinal direction of the storage conveyors (7), wherein a shuttle (9A-9B) is positioned on each shuttle track (10A-10B) and wherein each shuttle (9A-9C) is provided with means for loading the storage conveyors (10A-10C) with objects and/or unloading objects therefrom,
- a number of separate carriers (17) configured so that they can be moved by the at least one shuttle (9A-9C) and the storage conveyors (10A-10C), wherein each carrier (17) is configured to support at least one rolling container (21) such that the rolling container (21) is substantially secured by the carrier (17), and
- means (29) for placing a rolling container (21) on a carrier (17).

## Description

The invention relates to a system for storing objects, including rolling containers. The invention also relates to a carrier, and to a carrier structure forming part thereof, for supporting one or more rolling containers. The invention further relates to a method for storing rolling containers, in particular by making use of the system according to the invention.

A rack or system for storing objects is known from NL 1008004. In this known storage rack each level has a number of storage conveyors which connect on an end side to a shuttle track provided with driven shuttles which can travel on the shuttle track for the purpose of loading and unloading objects onto and from selected storage conveyors. The known system is particularly suitable for (temporary) storage of pallets, boxes and crates. The known system is however not suitable for storing (loaded) rolling containers.

An object of the invention is to provide an improved system for storing objects.

The invention provides for this purpose a system of the type stated in the preamble, comprising a number of storage conveyors placed adjacently of each other, and preferably one above another, for supporting and moving objects placed thereon, at least one shuttle track, and preferably a number of shuttle tracks placed one above another, at at least one end of the storage conveyors, which at least one shuttle track extends transversely of the longitudinal direction of the storage conveyors, wherein at least one shuttle is positioned on each shuttle track for moving objects in a direction transversely of the longitudinal direction of the storage conveyors, and wherein each shuttle is also configured to move objects in the longitudinal direction of the storage conveyors for the purpose of loading the storage conveyors with objects and/or unloading objects therefrom, a number of separate carriers configured so that they can be moved by the at least one shuttle and the storage conveyors, wherein each carrier is configured to support at least one rolling container, and/or other objects which cannot be transported without carrier, such that the rolling container is substantially secured by the carrier, and means for placing at least one rolling container on at least one carrier, which means are configured to move the carrier and the at least one rolling container in substantially vertical direction toward each other such that the rolling container is supported in substantially secured manner by the carrier. The system according to the invention, also referred to as (storage) rack, is also configured to store objects temporarily on desired storage conveyors by guiding these objects using a shuttle to an outer end (end side) of a storage conveyor and there moving them to the respective storage conveyor. Unloading of goods stored on the storage conveyors can take place in reverse manner. Examples hereof are included in the Netherlands patent NL 1008004, the content of which is deemed to form part of this patent specification by way of reference. An important difference relative to the known system is that the system is additionally provided with special carriers to enable securing in locked, substantially fixed, manner of (loaded) rolling containers and other objects which cannot be transported in stable manner without carrier, so that such naturally less stable objects can nevertheless also be stored in stable manner on a desired storage conveyor without this entailing safety risks. The term rolling container will also be understood below to mean equivalent objects which cannot be transported and/or stored in stable manner without carrier. The system further comprises means for enabling fully automated or semi-automated efficient loading of a carrier with one or more (loaded) rolling containers in order to facilitate stable and safe storage of rolling containers and/or containers in the system. In addition to rolling containers, the system according to the invention is also suitable for transport and (temporary) storage of for instance boxes, crates, pallets and combinations thereof.

Although it is possible to envisage the system comprising a single level with storage conveyors connecting at at least one end to one or more shuttle tracks, also referred to as a single-layer system, the system will generally comprise a plurality of levels lying one above another, wherein each level is formed at least partially by storage conveyors which connect at at least one end to one or more shuttle tracks.

Each carrier is configured to support in stable manner on the shuttles as well as on the storage conveyors, and also on optional lifts, and to support one or more rolling containers in secured manner. An underside of the carrier will generally take a substantially flat form in order to enable the carrier to support in stable, substantially fixed manner on an underlying component of the system. The carrier, also referred to as holder, sliding carrier or carriage, deters, and preferably wholly prevents, the rolling container being able to travel by means of its own support wheels relative to the carrier. This blocking or securing of the rolling container on the carrier can be realized in different ways, as will be further elucidated hereinbelow.

The carrier preferably comprises a carrier structure for supporting the underside of at least one rolling container. The flat, platform-like underside, optionally formed by a frame, of the rolling container will support in a loaded state of the carrier in substantially stable manner on the carrier structure of the carrier. The support wheels of the rolling container protrude downward relative to the underside of the rolling container and are preferably not supported here by the carrier structure. The carrier structure is more preferably provided with recesses for receiving at least a part of support wheels forming part of the at least one rolling container. The recesses are generally formed by lateral recesses formed through or in the peripheral wall of the carrier structure, whereby in top view the carrier structure generally takes a substantially cross-shaped form. The carrier structure is in fact formed here by a cross-shaped block configured to support or at least secure at least one rolling container. It is also possible to envisage the recesses being wholly surrounded/enclosed by the carrier structure, whereby receiving spaces or pockets are created for the support wheels of the rolling containers. The recesses are preferably sufficiently deep so that the support wheels of the rolling container cannot support, or at least not in stable manner, on an underlying part of the carrier, which is also referred to as the base of the carrier. In most common rolling containers it will be sufficient for the recesses to have a height or depth of at least 50 millimetres, more preferably at least 100 millimetres, and still more preferably at least 200 millimetres, and/or at least the height of the wheels, and more preferably at least the height of the wheels and a suspension structure of the wheels, of the associated rolling container. As stated, creating sufficient depth in the recesses ensures that the support wheels will not support on the base, or at least not in stable or significant manner, whereby the main support of the rolling container takes place through the underside of the rolling container supporting on the underlying carrier structure, which considerably enhances stabilizing and securing of the rolling container on the carrier, and thereby in the system. In addition to (vertically oriented) recesses for the support wheels of the rolling container it is also possible to envisage the carrier structure being provided with one or more (horizontally oriented) recesses, usually formed by surface grooves, in which a part of the means for placing at least one rolling container on at least one carrier, including for instance lifting tines, can be received during arranging of a rolling container on a carrier. The carrier, and in particular the carrier structure, are preferably free of moving parts. Applying a static (passive) carrier not provided with movable parts, such as for instance separately operated locking elements, enables the carrier, and thereby the carrier structure, to be given a structurally relatively simple, inexpensive and durable form.

The base of the carrier and the substantially upper carrier structure can be connected releasably to each other. This facilitates production of the carrier as such, wherein each component (base and carrier structure) can be optimized in relatively simple manner in respect of design and dimensioning. Furthermore, the releasable connection makes replacement of one of the components simpler. The releasable connection moreover makes it possible for one or both components to be formed by components already commercially available. It can for instance be recommended here for the base of the carrier to be formed by a generic (euro)pallet, preferably a wooden pallet. The most standard dimensions for industrial pallets are 1200 x 1000 (mm), for europallets 1200 x 800 (mm), and for a half-europallet 800 x 600 (mm).

In order to realize an optionally releasable connection between the base and the carrier structure of the carrier it is possible to envisage the base and the carrier structure being connected to each other by means of pins, in particular screws, bolts (and associated nuts) or by means of nails. It is also possible to envisage the carrier structure being provided with locking means for locking the carrier structure relative to the base. The locking means can for instance comprise hooks which co-act with the base and can engage round the base, whereby the carrier structure clamps fixedly relative to the base.

The carrier structure itself is preferably manufactured from plastic. Plastic has a relatively limited specific weight, is inexpensive and is moreover relatively simple to process to a desired carrier structure. By way of example HDPE, PVC, polyester or a combination thereof can for instance be applied. It is also possible to envisage the carrier structure being at least partially manufactured from a plastic foam, which reduces the specific weight and thereby decreases the load on the system, in particular the shuttles, shuttle tracks and storage conveyors. It is also possible to envisage the polymer being provided with additives, such as fillers, plasticizers and pigments. It is further possible to envisage the carrier structure having a modular construction, which can enhance the production and handling of the carrier structure.

It is advantageous for an upper side of the carrier structure to be provided with at least one anti-slip element. These anti-slip elements can be formed by an elastomer and/or be provided with an upward profile in order to prevent slip between the carrier structure (and carrier) on the one hand and the rolling container on the other. This enhances the overall securing of the rolling container on the carrier.

When the carrier is (temporarily) not in use, the carriers will generally be stacked. This stacking can also take place in stable manner by applying the one or more anti-slip elements.

In a preferred embodiment the means for placing at least one rolling container on at least one carrier are configured to mutually align a carrier and at least one rolling container and to move the carrier and the at least one rolling container toward each other. Mutual alignment is understood to mean that the rolling container is positioned above the carrier. This can be realized by moving the rolling container, by moving the carrier or by moving both the rolling container and the carrier. The subsequent movement of the rolling container and the carrier toward each other generally takes place in a linear movement. It is possible here to envisage the rolling container being moved in the direction of the carrier, the carrier being moved in the direction of the rolling container, or the rolling container and the carrier being moved toward each other.

The means for placing (positioning) at least one rolling container on at least one carrier takes place, as stated, by moving the carrier and the at least one rolling container in substantially vertical direction toward each other such that the rolling container is supported in substantially secured manner by the carrier. Movement of the carrier and the rolling container in substantially vertical direction toward each other is understood to mean that the vertical distance between the carrier and the rolling container is reduced during the relative displacement. This will preferably take place in linear, (substantially) vertical manner, although a horizontal movement component also playing a supplementary part in this displacement is not precluded.

The means for placing at least one rolling container on at least one carrier generally comprise a lift for moving a rolling container above a carrier and lowering the rolling container onto the carrier. The list can be embodied in various ways, and can for instance comprise lifting belts or lifting tines for raising and lowering a (loaded) rolling container. It is possible to envisage the list being axially rotatable to enable displacement of a rolling container from a feed position, in which a rolling container is lifted, to a release position in which a rolling container is set down on a carrier. The feed position can be defined by an end of a pre-conveyor which moves the (loaded) rolling container in the direction of the lift and (to some extent) in an upward direction, whereby the carrier arms (lifting tines) of the lift can engage easily on the underside of the rolling container.

In an alternative embodiment it is possible to envisage that the means for placing at least one rolling container on at least one carrier comprise at least one telescopic carrier arm for lifting a rolling container and setting the rolling container down on a carrier. The telescopic carrier arm has at least one extended position and a retracted position. In at least one extended position a rolling container positioned on the carrier arm can be placed on a carrier. Lifting of the rolling container by the telescopic carrier arm can take place in the retracted position or an opposite extended position. The bearing part of the carrier arm can have a substantially U-shaped cross-section here, whereby use of two (or more than two) surface grooves in the upper side of the carrier, in particular the carrier structure, for temporarily receiving a part of the bearing part of the carrier arm can be advantageous in enabling simple placing of the rolling container on the carrier and simple retraction of the carrier arm relative to the carrier.

It is also possible to envisage the means for placing at least one rolling container on at least one carrier being configured to move the carrier in upward direction relative to the at least one rolling container such that the rolling container is supported in substantially secured manner by the carrier. It is additionally possible to envisage both the rolling container(s) and the carrier being displaced and moved toward each other during placing of the at least one rolling container on the carrier.

The system preferably comprises at least one driven pre-sorting track configured to transport a carrier provided with at least one rolling container in the direction of a shuttle, and wherein the means for placing at least one rolling container on at least one carrier are configured to position the carrier on a pre-sorting track. Application of such a pre-sorting track is generally recommended over direct positioning on a shuttle of a carrier and rolling container arranged or to be arranged thereon, on the one hand because the shuttles can generally only move horizontally, whereby it would not be possible to transport the carrier provided with rolling container to another level, and on the other because the system according to the invention is also configured to store types of (non-rollable) objects other than rolling containers in the system. These other types of object need not be arranged on the special carrier but can be taken up directly in the system and moved. The pre-sorting track imparts more flexibility in respect of reaching a desired location in the system, and in respect of the nature of the objects to be accommodated in the system.

In order to reach a desired level in the system it is advantageous that the system comprises a vertical lift for moving in upward and/or downward direction at least one rolling container arranged on a carrier in the direction of a desired shuttle track, from which the rolling container provided with the carrier can be transported to a desired storage conveyor. The vertical lift will generally be positioned between the pre-sorting track and the shuttle tracks.

Each shuttle track preferably comprises rails, wherein each shuttle is provided with wheels to enable travel of the shuttle over the rails. The shuttle more preferably comprises a drive mechanism for driving at least one wheel to enable travel of the shuttle over the rails for the purpose of enabling movement of objects transversely of the longitudinal direction of the storage conveyors and in substantially horizontal direction. Each shuttle preferably further comprises a driven conveyor for moving objects in the longitudinal direction of the storage conveyors. This latter conveyor of the shuttle can also comprise one or more chain conveyors (chain tracks) oriented substantially parallel to each other.

The storage conveyors are preferably (also) motor-driven, and therefore configured to move objects positioned thereon in a longitudinal direction of the storage conveyors. Each storage conveyor can for instance be formed by a conveyor belt or by a roller conveyor. It is also possible to envisage the storage structure connecting to the shuttle(s) also comprising one or more chain conveyors (chain tracks) oriented substantially parallel to each other. The number of chain conveyors of a shuttle and the number of chain conveyors of a storage conveyor preferably correspond in order to guarantee the smoothest possible displacement of objects between a shuttle and a storage conveyor.

It is possible to envisage a plurality of shuttle tracks being applied at a level in the system, wherein a number of conveyors are enclosed at opposite ends by two shuttle tracks.

The invention also relates to a carrier for use in a system according to the invention.

The invention also relates to a carrier structure of a carrier for use in a system according to the invention.
The invention further relates to a method for storing rolling containers, in particular by making use of a system according to the invention, comprising the steps of: A) positioning at least one rolling container on a carrier such that the rolling container is substantially secured, B) placing the assembly of the carrier and the at least one rolling container on a shuttle, C) moving the shuttle to an end of a desired storage conveyor, and D) moving the assembly of the carrier and the at least one rolling container from the shuttle to the storage conveyor.

Diverse embodiment variants of the invention are described in the non-limitative clauses below:
1. System for storing objects, including rolling containers, comprising:
   - a number of storage conveyors placed adjacently of each other, and preferably a number of storage conveyors placed one above another, for supporting and moving objects placed thereon,
   - at least one shuttle track, and preferably a number of shuttle tracks placed one above another, at at least one end of the storage conveyors, which at least one shuttle track extends transversely of the longitudinal direction of the storage conveyors, wherein at least one shuttle is positioned on each shuttle track for moving objects in a direction transversely of the longitudinal direction of the storage conveyors, and wherein each shuttle is also configured to move objects in the longitudinal direction of the storage conveyors for the purpose of loading the storage conveyors with objects and/or unloading objects therefrom,
   - a number of separate carriers configured so that they can be moved by the at least one shuttle and the conveyors, wherein each carrier is configured to support at least one rolling container such that the rolling container is substantially secured by the carrier, and
   - means for placing at least one rolling container on at least one carrier.
2. System according to clause 1, wherein at least one separate carrier comprises a carrier structure for supporting the underside of at least one rolling container.
3. System according to clause 2, wherein the carrier structure is provided with recesses for receiving at least a part of support wheels forming part of the at least one rolling container.
4. System according to clause 3, wherein the recesses have a height of at least 100 millimetres, preferably at least 200 millimetres, and/or at least have a height of at least the height of the wheels of a rolling container.
5. System according to any of the clauses 2-4, wherein the carrier comprises a base on which the carrier structure is arranged.
6. System according to clause 5, wherein the base and the carrier structure are connected releasably to each other.
7. System according to clause 6, wherein the base and the carrier structure are connected to each other by means of pins, in particular screws or bolts.
8. System according to clause 6 or 7, wherein the carrier structure is provided with locking means for locking the carrier structure relative to the base.
9. System according to any of the clauses 5-8, wherein the base is formed by a pallet, preferably a wooden pallet.
10. System according to any of the clauses 2-9, wherein the carrier structure is manufactured substantially from plastic.
11. System according to any of the clauses 2-10, wherein the carrier structure has a modular construction.
12. System according to any of the clauses 2-11, wherein an upper side of the carrier structure is provided with at least one anti-slip element.
13. System according to any of the foregoing clauses, wherein the means for placing at least one rolling container on at least one carrier are configured to mutually align a carrier and at least one rolling container and to move the carrier and the at least one rolling container toward each other.
14. System according to any of the foregoing clauses, wherein the means for placing at least one rolling container on at least one carrier comprise a lift configured to move a rolling container above a carrier and lower the rolling container onto the carrier.
15. System according to clause 14, wherein the lift is axially rotatable to enable displacement of a rolling container from a feed position to a release position.
16. System according to any of the foregoing clauses, wherein the means for placing at least one rolling container on at least one carrier comprise at least one telescopic carrier arm for lifting a rolling container and setting the rolling container down on a carrier.
17. System according to any of the foregoing clauses, wherein the system comprises at least one driven pre-sorting track configured to transport a carrier provided with at least one rolling container in the direction of a shuttle, and wherein the means for placing at least one rolling container on at least one carrier are configured to position the carrier on a pre-sorting track.
18. System according to any of the foregoing clauses, wherein the system comprises a vertical lift for moving at least one rolling container arranged on a carrier to a shuttle track at a desired level.
19. System according to clauses 17 and 18, wherein the vertical lift is positioned between the pre-sorting track and the shuttle tracks.
20. System according to any of the foregoing clauses, wherein each shuttle track comprises rails, and wherein each shuttle is provided with wheels to enable travel of the shuttle over the rails.
21. System according to clause 20, wherein the shuttle comprises a drive mechanism for driving at least one wheel to enable travel of the shuttle over the rails.
22. System according to any of the foregoing clauses, wherein each shuttle comprises a driven conveyor for moving objects in the longitudinal direction of the storage conveyors.
23. System according to any of the foregoing clauses, wherein the shuttles and the conveyors are configured to support the carriers.
24. System according to any of the foregoing clauses, wherein each storage conveyor is motor-driven.
25. System according to any of the foregoing clauses, wherein a number of conveyors connect at opposite ends to a shuttle track.
26. System according to any of the foregoing clauses, wherein the system is provided with at least one carrier which supports at least one rolling container.
27. Carrier for use in a system according to any of the foregoing clauses.
28. Carrier structure of a carrier for use in a system according to any of the clauses 2-12.
29. Method for storing rolling containers, in particular by making use of a system according to any of the clauses 1-26, comprising the steps of:
   A) positioning at least one rolling container on a carrier such that the rolling container is substantially secured,
   B) placing the assembly of the carrier and the at least one rolling container on a shuttle,
   C) moving the shuttle to an end of a desired storage conveyor, and
   D) moving the assembly of the carrier and the at least one rolling container from the shuttle to the storage conveyor.

The invention will be elucidated on the basis of non-limitative exemplary embodiments as shown in the following figures. Herein:
- figure 1 is a schematic perspective view of a first embodiment of a storage system according to the invention;
- figure 2 is a schematic perspective view of a second embodiment of a storage system according to the invention;
- figure 3 is a schematic perspective view of a detail of figure 2;
- figure 4A is a schematic perspective view of an embodiment of a carrier structure according to the invention;
- figure 4B is a schematic perspective view of a part of the carrier structure according to figure 4A;
- figure 5 is a schematic perspective view of a further embodiment of a storage system according to the invention;
- figure 6 is a schematic perspective view of a detail of figure 5; and
- figure 7 is a schematic perspective view of another embodiment of a carrier structure according to the invention.

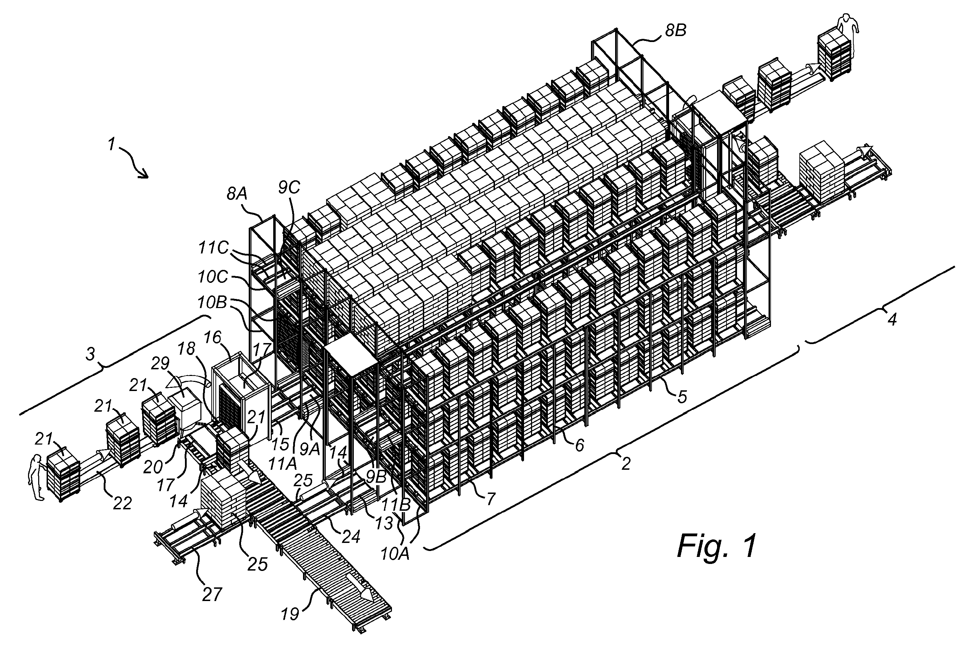

Figure 1 is a schematic perspective view of a non-limitative exemplary embodiment of a storage system 1 according to the invention. Storage system 1 comprises a storage area 2, an entry 3 and an exit 4, wherein the entry and exit can alternatively also be located on the same side of the storage area. Storage area 2 is placed in figure 1 between entry 3 at a first end side and an exit 4 at a second end side.

Storage area 2 comprises a support frame 5 which comprises at a number of levels a number of storage conveyors 7, for instance roller conveyors or chain conveyors, which are placed adjacently of each other and mutually connected with a number of uprights 6. Each storage conveyor 7 can here carry a number of pallets 25 loaded with non-movable objects and/or rolling containers 21 stationed in secured manner on carriers. Rolling containers 21 and/or pallets 25 are carried into storage area 2 at the first end side by means of entry 3 and removed again from storage area 2 on the second end side by means of exit 4.

Switching station 8A here comprises a frame in which a number of shuttles 9A, 9B and 9C can move substantially horizontally over the respective shuttle tracks, embodied in figure 1 as rails 10A, 10B and 10C. There is a separate shuttle 9A, 9B or 9C for each layer or level of storage conveyors 7 in storage area 2. Arranged on each shuttle 9A, 9B and 9C is a respective conveyor 10A, 10B and 10C for the purpose of carrying the cargo, i.e. pallet 25 or rolling container 21, on carrier structure 17 into storage area 2.

A lift 12 is placed against switching station 8A in order to move said pallet 25 or rolling container 21 on carrier structure 17 onto shuttles 9A-C. Lift 12 comprises a cage 13 for vertical movement suspended in a frame. Cage 13 comprises a conveyor 14 which can carry a pallet 25 and/or a rolling container 21 on a carrier structure 17 from roller conveyor 19, via conveyor 25 to the respective shuttle 9A-C.

Provided for the purpose of moving the conventional pallets 25 (loaded with non-movable objects) into storage area 2 is a conveyor 27 on which a pallet 25 can be placed, for instance manually, by a forklift truck or directly from a production supply line. This pallet 25 can then be placed by means of conveyor 26 onto roller conveyor or chain conveyor 19. Roller conveyor 19 can subsequently move pallet 25 to the position in front of lift 12. Here the conveyors 24 and 25, and conveyor 14 on cage 13, can move pallet 25 onto cage 13 of lift 12. Lift 12 can then carry pallet 25 to the desired height, where pallet 25, by means of conveyor 14 on the cage and one of the conveyors 11 A, 11 B or 11 C of respective shuttles 9A, 9B or 9C, can be placed on a respective shuttle 9A, 9B or 9C. Shuttle 9A, 9B or 9C can then transport pallet 25 to the respective storage conveyor 7 and here then place it on the respective storage conveyor by means of the respective conveyor 11 A, 11 B or 11C.

In order to be able to store rolling containers 21 in storage area 2, in the embodiment as shown in figure 1 a rolling container 21 is first guided and lifted via a conveyor 22 rising at an incline in the direction of storage area 2 such that the wheels of rolling container 21 become suspended and rolling container 21 supports with its bottom surface between the wheels on conveyor 22. By means of a lifting device 23 rolling container 21 is subsequently lifted using two lifting tines and, once lifted, rotated substantially through a quarter-turn to a position above a carrier structure 17 which forms an integral part of a carrier and which comprises a platelike element with two recesses therein so that the wheels of rolling container 21 can be fixed or at least rendered passive.

Carrier structure 17 is placed from a buffer 16 via a conveyor 18 onto roller conveyor 19. Buffer 16 can store carrier structures 17 fed back from the storage area by means of conveyor 15. For this purpose one storage conveyor 7 in storage area 2 can be configured to feed back substantially only carrier structures 17. At exit 4 rolling containers 21 are lifted off carrier structures 17 again by for instance a device similar to lifting device 23. The empty carrier structures 17 can then be fed back in optionally stacked manner through storage area 2.

The carrier comprising carrier structure 17 and with a rolling container 21 placed thereon can be placed in similar manner as pallet 25 on cage 13 of lift 12 by means of roller conveyor 19 and respective conveyors 24, 25 and 14. Lift 12 can then carry the carrier with rolling container 21 thereon to the desired height, where shuttles 9A, 9B or 9C can place the assembly of the carrier and the rolling container 21 secured thereon onto the respective storage conveyor 7.

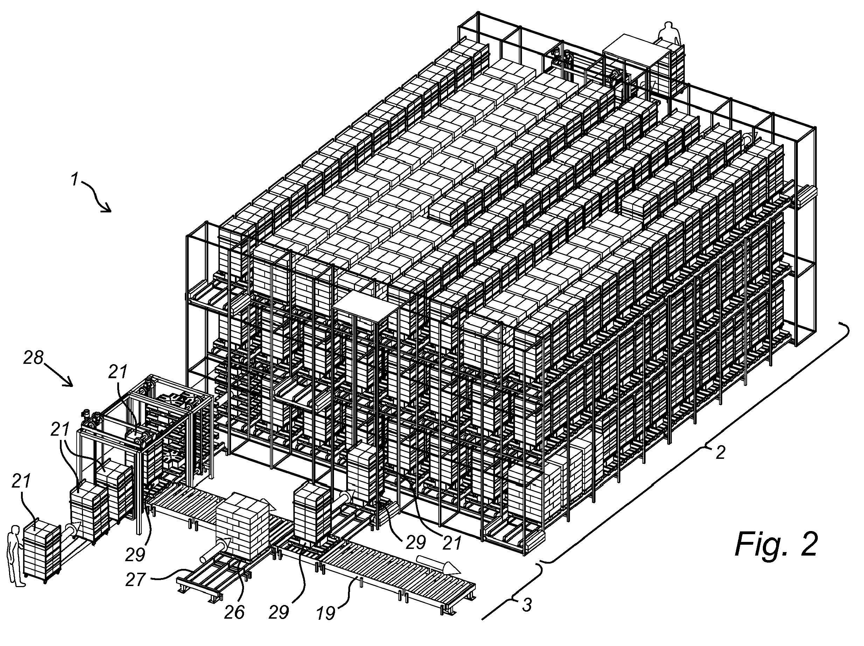

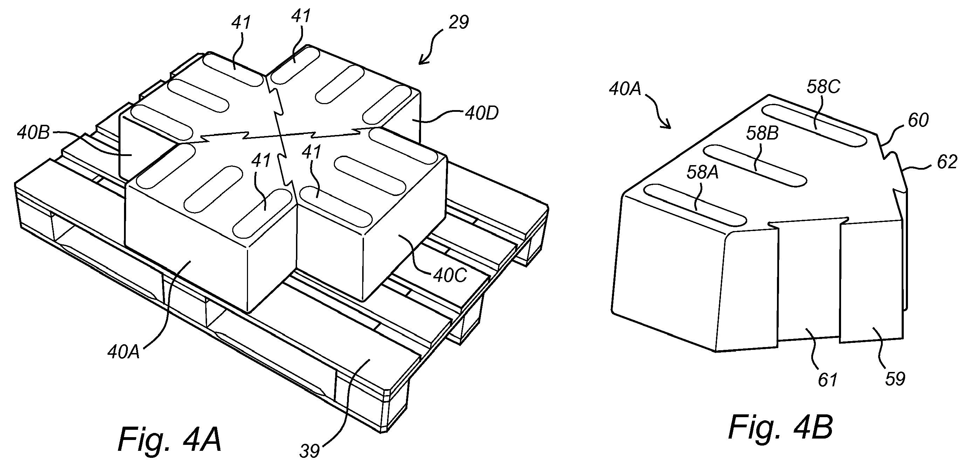

Figure 2 shows an alternative embodiment of a system for storing pallets 26 and rolling containers 21. Rolling containers 21 are placed on respective carrier structures 29 by means of a lifting device embodied as portal conveyor 28 and subsequently carried into storage area 2 in similar manner as shown in figure 1. As shown in more detail in figure 4A, each carrier structure 29 is placed on a base 39 formed by a pallet, wherein carrier structure 29 and base 39 are connected, more preferably in releasable manner, to each other. The assembly of base 39 and carrier structure 29 is referred to as carrier.

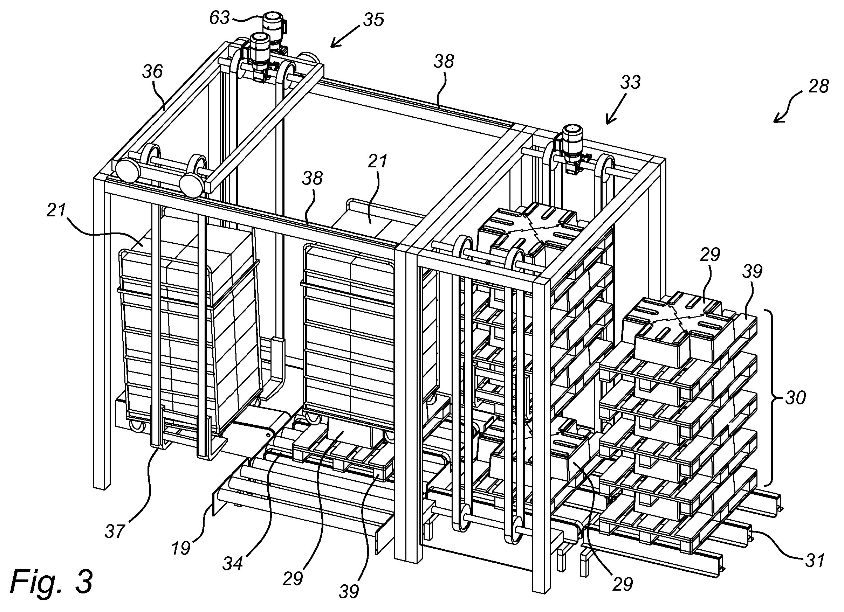

Figure 3 shows portal conveyor 28 in more detail. Portal conveyor 28 can feed a number of carriers from a buffer 30 by means of conveyors 31 and 32 into portal conveyor 28, where lifting device 33 can release the lower carrier from the carriers placed above by lifting these pallets placed above and moving pallet 29 to a subsequent position on roller conveyor 19. In this position of the carrier the portal conveyor 28 can place a rolling container 21 onto the carrier by means of lifting tines 37 or lifting construction. By means of gantry crane 35 the portal crane 28 can place rolling container 21 on carrier structure 29 arranged on a pallet 39, wherein the wheels of rolling container 21 remain freely suspended. Gantry crane 35 is driven here by an electric motor 63. Rolling container 21 rests with it bottom surface on the upper side of carrier structure 29. Once it has been placed on carrier structure 29, the lifting device moves aside and rolling container 21 can be fed via roller conveyor 19 into storage area 2 in similar manner as shown in the embodiment of figure 1.

Figure 4A shows the exemplary embodiment of the carrier with carrier structure 29 in more detail. As shown in figure 4A, carrier structure 29 can comprise four parts 40A, 40B, 40C and 40D of substantially the same shape, although the carrier need not per se comprise four parts. Parts 40A-D can be attached to pallet 39 by means of for instance screws, bolts, snap systems and/or clamps. Parts 40A-D comprise anti-slip strips 41 on which the underside of the bottom surface of rolling container 21 can rest. A lateral displacement can be prevented by these strips 41.

Figure 4B shows one of the parts 40A, which is provided with a fitting piece in the form of a wedge-shaped protrusion 62 and a wedge-shaped recess 61. Protrusion 61 of a first part 40A can fit tightly here into recess 62 of a second part 40B. Four parts 40A, 40B, 40C and 40D can form a cross-shaped carrier structure 29, wherein the cross shape provides a stable supporting surface for a rolling container 21, while the wheels of rolling container 21 can hang free. A lateral displacement can hereby be prevented.

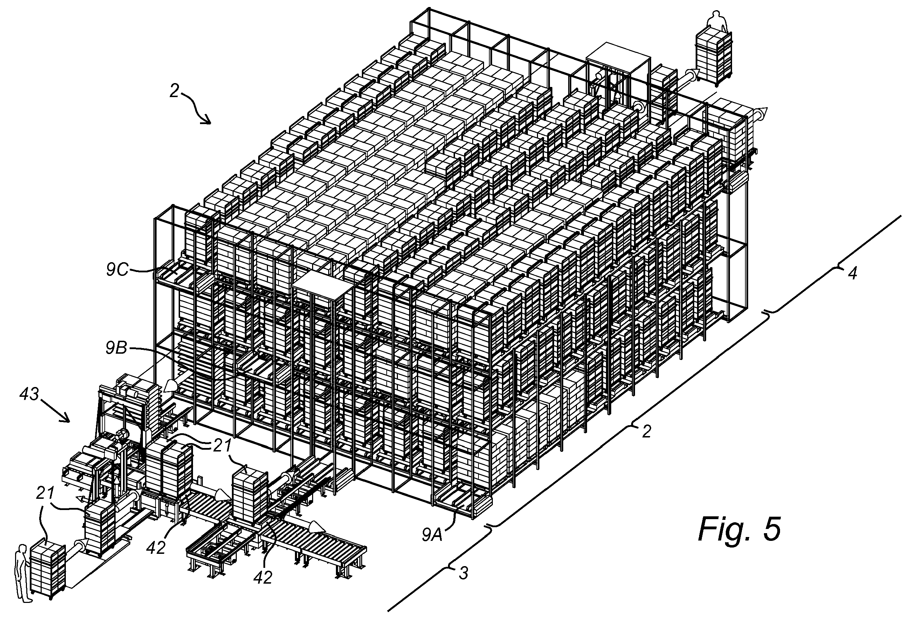

Figure 5 shows an alternative embodiment of a system for storing objects, including boxes, crates, pallets and rolling containers stabilized by carriers, and optionally other types of object stabilized by carriers, wherein two rolling containers 21 can be placed on one carrier, in particular on a carrier structure 42 forming part thereof, by means of a lifting device 43. More than one rolling container can alternatively also be placed on one carrier structure. A rolling container 21 is placed here on carrier structure 42 by means of a telescopic support arm 44, as will be elucidated in more detail below.

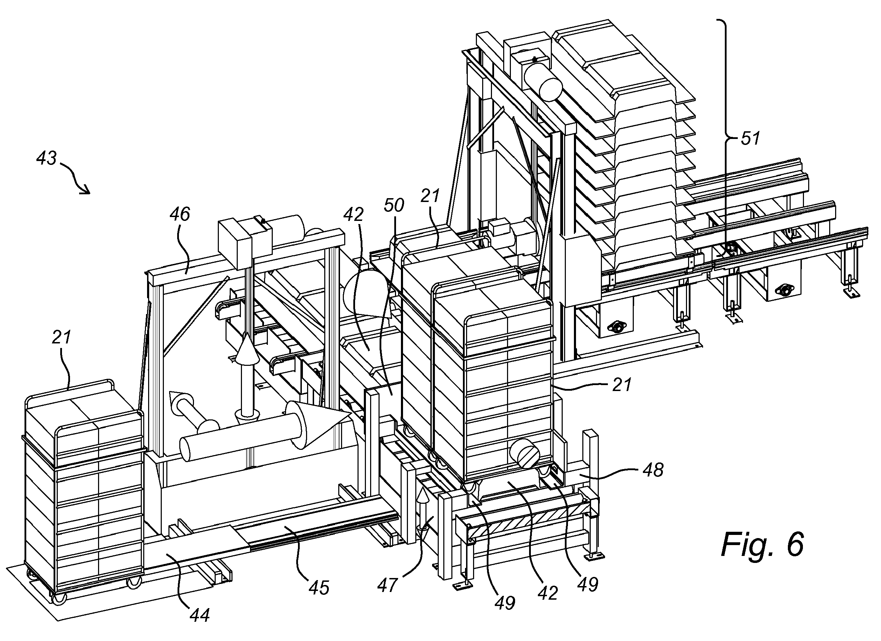

Figure 6 shows lifting device 43 in more detail. The lifting device comprises a buffer 51 from which a single carrier comprising a carrier structure 42 is released at a time and transported to the position of the carrier. Here a part of roller conveyor 19 can be moved downward by means of lift 47. Once the carrier has in this way been placed in a low position, lift 46 lifts a first rolling container 21 using a telescopic arm 44 and places this rolling container 21 with the wheels supporting on rails 49. Lift 46, when applied, subsequently lifts and likewise places a second rolling container 21 above roller conveyor 19 with the wheels supporting on rails 49. Lift 46 can displace rolling containers 21 in three directions here as indicated by the arrows. It is noted here that the sequence of first placing carrier structure 42 and then the one or more rolling containers 21 can also be reversed, i.e. rolling containers 21 are placed first and only then is carrier structure 42 added.

Once one or more rolling containers 21 have been arranged above roller conveyor 19, lift 47 lifts the carrier so that, with the latter pressing against the bottom surface of rolling containers 21, it lifts these rolling containers 21 such that the wheels of rolling containers 21 hang free. Roller conveyor 19 can then further transport the carrier with the two rolling containers 21 placed thereon to storage area 2, as according to the embodiments as shown in figures 1 and 2.

Rails 49 can optionally be placed at a slight angle in the direction of partition 50 such that rolling containers 21 roll in the direction of partition 50. Partition 50 can serve here as a stop for the purpose of positioning rolling containers 21 as accurately as possible.

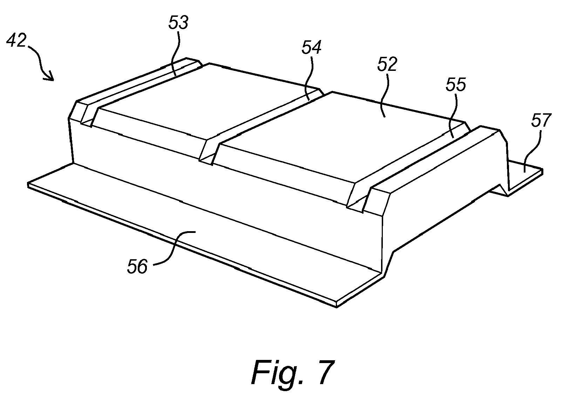

Figure 7 shows in more detail the carrier as shown in figures 5 and 6. The carrier comprises a carrier structure 42 provided with an upper side 52 in which grooves 53, 54 and 55 are arranged. These grooves are intended to enable compact stacking of the carriers. The carrier also comprises a base integrally connected to carrier structure 42. The base is formed in this exemplary embodiment by two support surfaces 56 and 57 which can bring about a relatively problem-free and stable transport over the various conveyors and roller conveyors in the storage system.

It will be apparent that the invention is not limited to the exemplary embodiments shown and described here, but that numerous variants which will be obvious to the skilled person in this field are possible within the scope of the appended claims. It is possible here to envisage that different inventive concepts and/or technical measures of the above described embodiment variants can be wholly or partially combined without departing from the inventive concept described in the appended claims.

The verb "comprise" and conjugations thereof used in this patent specification are understood to mean not only "comprise", but also the terms "consist of", "substantially consist of", "formed by" and conjugations thereof.

### List of reference numerals

- 1.: Storage system
- 2.: Storage area
- 3.: Entry
- 4.: Exit
- 5.: Support frame
- 6.: Uprights
- 7.: Storage conveyors
- 8.: Switching station
- 9A.: Shuttle
- 9B.: Shuttle
- 9C.: Shuttle
- 10A.: Rails
- 10B.: Rails
- 10C.: Rails
- 11 A.: Conveyor
- 11B.: Conveyor
- 11C.: Conveyor
- 12.: Lift
- 13.: Cage
- 14.: Conveyor
- 15.: Conveyor
- 16.: Buffer
- 17.: Carrier structure
- 18.: Conveyor
- 19.: Roller conveyor
- 20.: Conveyor
- 21.: Rolling container
- 22.: Conveyor
- 23.: Lifting device
- 24.: Conveyor
- 25.: Conveyor
- 26.: Pallet
- 27.: Conveyor
- 28.: Portal conveyor
- 29.: Carrier structure
- 30.: Buffer
- 31.: Conveyor
- 32.: Conveyor
- 33.: Lifting device
- 34.: Conveyor
- 35.: Lifting device
- 36.: Gantry crane
- 37.: Lifting tines
- 38.: Rails
- 39.: Pallet
- 40A.: Part
- 40B.: Part
- 40C.: Part
- 40D.: Part
- 41.: Strip
- 42.: Carrier structure
- 43.: Lift system
- 44.: Telescopic support arm
- 45.: Arm support
- 46.: Lift
- 47.: Lift
- 48.: Frame
- 49.: Rails
- 50.: Partition
- 51.: Buffer
- 52.: Core body
- 53.: Groove
- 54.: Groove
- 55.: Groove
- 56.: Support surface
- 57.: Support surface
- 58A-C.: Groove
- 59.: Wall
- 60.: Wall
- 61.: Recess
- 62.: Protrusion
- 63.: Electric motor

## Claims

1. System for storing objects, including rolling containers, comprising:
- a number of storage conveyors placed adjacently of each other, and preferably a number of storage conveyors placed one above another, for supporting and moving objects placed thereon,
- at least one shuttle track, and preferably a number of shuttle tracks placed one above another, at at least one end of the storage conveyors, which at least one shuttle track extends transversely of the longitudinal direction of the storage conveyors, wherein at least one shuttle is positioned on each shuttle track for moving objects in a direction transversely of the longitudinal direction of the storage conveyors, and wherein each shuttle is also configured to move objects in the longitudinal direction of the storage conveyors for the purpose of loading the storage conveyors with objects and/or unloading objects therefrom,
- a number of separate carriers configured so that they can be moved by the at least one shuttle and the storage conveyors, wherein each carrier is configured to support at least one rolling container such that the rolling container is substantially secured by the carrier, and
- means for placing at least one rolling container on at least one carrier, which means are configured to move the carrier and the at least one rolling container in substantially vertical direction toward each other such that the rolling container is supported in substantially secured manner by the carrier.

2. System as claimed in claim 1, wherein at least one separate carrier comprises a carrier structure for supporting the underside of at least one rolling container.

3. System as claimed in claim 2, wherein the carrier structure is provided with recesses for receiving at least a part of support wheels forming part of the at least one rolling container.

4. System as claimed in claim 3, wherein the recesses have a height of at least 100 millimetres, preferably at least 200 millimetres, and/or at least have a height of at least the height of the wheels of a rolling container.

5. System as claimed in any of the claims 2-4, wherein the carrier comprises a base on which the carrier structure is arranged.

6. System as claimed in claim 5, wherein the base and the carrier structure are connected releasably to each other.

7. System as claimed in claim 6, wherein the base and the carrier structure are connected, preferably releasably, to each other by means of pins, in particular screws or bolts.

8. System as claimed in any of the claims 5-7, wherein the base is formed by a pallet, preferably a wooden pallet.

9. System as claimed in any of the claims 2-8, wherein the carrier structure is free of moving parts.

10. System as claimed in any of the foregoing claims, wherein the means for placing at least one rolling container on at least one carrier are configured to mutually align a carrier and at least one rolling container.

11. System as claimed in any of the foregoing claims, wherein the means for placing at least one rolling container on at least one carrier comprise a lift configured to move a rolling container above a carrier and lower the rolling container onto the carrier.

12. System as claimed in any of the foregoing claims, wherein the means for placing at least one rolling container on at least one carrier are configured to move the carrier in upward direction relative to the at least one rolling container such that the rolling container is supported in substantially secured manner by the carrier.

13. Carrier for use in a system as claimed in any of the foregoing claims, comprising a carrier structure for supporting the underside of at least one rolling container, preferably provided with recesses for receiving at least a part of support wheels forming part of the at least one rolling container, and wherein the carrier comprises a base on which the carrier structure is arranged, wherein the base and the carrier structure are preferably connected releasably to each other.

14. Carrier structure of a carrier for use in a system as claimed in any of the claims 2-9, which carrier structure is configured to secure at least one rolling container, and which carrier structure is provided with recesses for receiving at least a part of support wheels forming part of the at least one rolling container.

15. Method for storing rolling containers, in particular by making use of a system as claimed in any of the claims 1-12, comprising the steps of:
A) positioning at least one rolling container on a carrier such that the rolling container is substantially secured,
B) placing the assembly of the carrier and the at least one rolling container on a shuttle,
C) moving the shuttle to an end of a desired storage conveyor, and
D) moving the assembly of the carrier and the at least one rolling container from the shuttle to the storage conveyor,
wherein during step A) the at least one rolling container is positioned on at least one carrier by moving the carrier and the at least one rolling container in substantially vertical direction toward each other such that the rolling container is supported in substantially secured manner by the carrier.
